# EUROPEAN PATENT APPLICATION

(11) **EP 4 826 875 A1**
(43) Date of publication of application: **21.10.2026**
(21) Application number: 24927984.5
(22) Date of filing: 31.07.2024
(51) Int. Cl.: H01M 50/244

(54) **BATTERY AND ELECTRIC DEVICE**

(30) Priority: 07.03.2024 CN 202420446298 U
(71) Applicant: Contemporary Amperex Technology Co., Limited, Ningde, Fujian 352100 (CN)
(72) Inventor: WANG, Peng, Ningde, Fujian 352100 (CN); CHEN, Xingdi, Ningde, Fujian 352100 (CN); YAO, Pengcheng, Ningde, Fujian 352100 (CN)
(74) Representative: Ziebig Hengelhaupt Intellectual Property Attorneys Patentanwaltskanzlei PartGmbB
(86) International application number: PCT/CN2024/109043
(87) International publication number: WO 2025/185051

(57) **Abstract**

A battery (10) and an electric device, which belong to the technical field of batteries. The battery (10) comprises: a case (11); a bottom protective plate (13), the bottom protective plate (13) and the case (11) defining an accommodating cavity; a plurality of battery cells (12), which are mounted in the accommodating cavity; and protective structures (14), wherein the protective structures (14) are mounted on an end beam (111) of the case and located between the end beam (111) and the bottom protective plate (13), and the minimum distance between each protective structure (14) and the bottom protective plate (13) is not greater than the minimum distance between each battery cell (12) and the bottom protective plate (13).

## Description

### CROSS-REFERENCE TO RELATED APPLICATIONS

The present application is based on and claims priority to Chinese Patent Application No.: 202420446298.8, filed on March 07, 2024, the entire disclosure of which is incorporated herein by reference.

### TECHNICAL FIELD

The present application relates to the technical field of batteries, and in particular, to a battery and an electric device.

### BACKGROUND

The battery is very vulnerable to damage under a bottom scraping condition or a bottom ball condition, and when the impact force caused by the bottom support is too large, the battery may be directly caused to have problems such as abnormal insulation. However, the damage caused by the bottom support is at the bottom of the battery, which is not easy to detect and has concealment. Although some bottom support accidents do not catch fire at the time, the electric device can continue to work. However, the battery has been seriously deformed. If not detected and handled in a timely manner, the battery and high-voltage devices will remain in a compressed state, and the battery may self-ignite or even experience serious safety accidents such as explosion after a period of time.

### SUMMARY

The present application provides a battery and an electric device, to reduce impact energy received by a first battery cell, and effectively protect battery cells at an end in a targeted manner, thereby reducing the assembly difficulty of a protective structure.

In a first aspect, an embodiment of the present application provides a battery, including:
a case;
a bottom protective plate, where the bottom protective plate and the case define an accommodating cavity;
a plurality of battery cells, where the plurality of battery cells are mounted in the accommodating cavity; and
protective structures, where the protective structures are mounted on an end beam of the case and located between the end beam and the bottom protective plate, and a minimum distance between each of the protective structures and the bottom protective plate is not greater than a minimum distance between each of the battery cells and the bottom protective plate.

In the above technical solution, the bottom support protection of the plurality of battery cells is realized by disposing the above protective structures in cooperation with the position design of the end beam mounted on the case, and under the bottom scraping or bottom ball impact condition, the protective structures can replace the battery cell close to the end beam to firstly bear the impact of bottom scraping, thereby reducing the impact energy received by the first battery cell, and then effectively protecting the battery cells at the end in a targeted manner, and compared with the case where the protective structures are directly disposed at the bottom of the battery cell, the assembly difficulty of the protective structures is reduced, and the connection strength of the protective structures is improved.

In some embodiments, the end beam includes a first sub-beam and a second sub-beam that are connected, the second sub-beam is located on a side of the first sub-beam close to the accommodating cavity, each of the protective structures is mounted on the second sub-beam, and a minimum distance between the first sub-beam and the bottom protective plate is less than a minimum distance between the second sub-beam and the bottom protective plate.

In the above technical solution, by setting the relationship of the minimum distances between the first sub-beam and the second sub-beam and the bottom protective plate, the protective structures and the second sub-beam are assembled, the reserved space between the second sub-beam and the bottom protective plate is completely sufficient to accommodate the protective structures, and the bottom protective plate does not need to be additionally designed with a special shape to compensate for the assembly tolerance, thereby simplifying the processing steps, reducing the processing difficulty, and further improving the production efficiency of the battery, which is beneficial to popularization and mass production.

In some embodiments, the minimum distance H1 between each of the protective structures and the bottom protective plate and the minimum distance H2 between each of the battery cells and the bottom protective plate satisfy: 1mm≤H2-H1≤50mm.

In some embodiments, each of the protective structures includes an assembly portion and a protrusion portion, the assembly portion is connected to the end beam, the protrusion portion protrudes from the assembly portion toward the bottom protective plate, and a minimum distance between the protrusion portion and the bottom protective plate is not greater than the minimum distance between each of the battery cells and the bottom protective plate.

In some embodiments, in a case that an explosion-proof valve of each of the battery cells faces the bottom protective plate, the protrusion portion and the explosion-proof valve are disposed opposite to each other, and a length of the protrusion portion is greater than a length of the explosion-proof valve.

In some embodiments, the battery further includes:
a pressing bar, where the pressing bar is connected to the case, is located between the plurality of battery cells and the bottom protective plate, and is configured to cooperate with each of the protective structures to protect electrode terminals of each of the battery cells, and a length of the protrusion portion is less than a distance between the farthest ends of two electrode terminals of each of the battery cells.

In some embodiments, in a case that the explosion-proof valve of each of the battery cells does not face the bottom protective plate and the electrode terminals of each of the battery cells face the bottom protective plate, a length of the protrusion portion is not less than a distance between the farthest ends of two electrode terminals of each of the battery cells.

In some embodiments, there are a plurality of protective structures spaced apart in a length direction of the end beam, a plurality of battery cells are arranged in an array stack in the accommodating cavity, and the plurality of protective structures are in one to-one correspondence with the plurality of columns of battery cells.

In some embodiments, a maximum height H3 of each of the protective structures satisfies: 1mm≤H3≤50mm.

In some embodiments, a minimum width L of each of the protective structures satisfies: 10mm≤L≤50mm.

In some embodiments, the case includes a front end beam and a rear end beam, and in a case that the battery is mounted to a vehicle, the front end beam and the rear end beam are spaced apart in a front-rear direction along a traveling direction of the vehicle, where
the front end beam is provided with the protective structure;
   or
the front end beam and the rear end beam are both provided with the protective structures.

In a second aspect, an embodiment of the present application further provides an electric device, including:
the battery according to any one of the above.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of the present application;
FIG. 2 is an exploded view of a structure of a battery according to some embodiments of the present application;
FIG. 3 is a partial structural schematic view of a battery cell according to some other embodiments of the present application;
FIG. 4 is a sectional view of a battery cell according to some embodiments of the present application;
FIG. 5 is an enlarged structural view of A in FIG. 4;
FIG. 6 is a schematic structural diagram I of a protective structure according to some embodiments of the present application;
FIG. 7 is a schematic structural diagram II of a protective structure according to some embodiments of the present application; and
FIG. 8 is a schematic structural diagram III of a protective structure according to some embodiments of the present application.

### Reference numerals:

1, vehicle; 20, motor; 30, controller;
10, battery;
11, case; 111, end beam; 1111, first sub-beam; 1112, second sub-beam;
12, battery cell; 13, bottom protective plate;
14, protective structure; 141, assembly portion; 142, protrusion portion;
15, pressing bar; 16, buffer member.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the present application, "plurality" means two or more than two (including two). Similarly, "a plurality of groups" means two or more than two groups, and "a plurality of pieces" means two or more than two pieces.

The battery cell mentioned in the embodiments of the present application may include a lithium-ion secondary battery, a lithium-ion primary battery, a lithium-sulfur battery, a sodium-lithium ion battery, a sodium-ion battery, a magnesium-ion battery, or the like, which is not limited in the embodiments of the present application. The battery cell may be in a shape of a cylinder, a flat body, a cuboid, or the like, which is not limited in the embodiments of the present application. The battery cells are generally classified into three types in terms of packaging manner: cylindrical battery cells, prismatic battery cells, and pouch battery cells, which are not limited in the embodiments of the present application.

A battery mentioned in the embodiments of the present application refers to a single physical module including one or a plurality of battery cells to provide a higher voltage and capacity. For example, the battery mentioned in the present application may include a battery module or a battery pack, etc. The battery generally includes a case for encapsulating one or more battery cells or one or more battery modules. The case can prevent liquids or other foreign objects from affecting the charging or discharging of the battery cells.

The battery cell includes a housing, an electrode assembly, and an electrolyte, where the housing is configured to accommodate the electrode assembly and the electrolyte. The electrode assembly includes a positive electrode sheet, a negative electrode sheet, and a separator. Working of the battery cell mainly relies on migration of metal ions between the positive electrode sheet and the negative electrode sheet. The positive electrode sheet includes a positive electrode current collector and a positive electrode active material layer. A surface of the positive electrode current collector is coated with the positive electrode active material layer. A portion that is of the positive electrode current collector and that is not coated with the positive electrode active material layer protrudes from a portion that is of the positive electrode current collector and that is coated with the positive electrode active material layer, and the portion that is of the positive electrode current collector and that is not coated with the positive electrode active material layer is used as a positive electrode tab. A lithium-ion battery is used as an example, for which, the positive electrode current collector may be made of aluminum, and the positive electrode active material may be lithium cobalt oxide, lithium iron phosphate, ternary lithium, lithium manganate oxide, or the like. The negative electrode sheet includes a negative electrode current collector and a negative electrode active material layer. A surface of the negative electrode current collector is coated with the negative electrode active material layer. A portion that is of the negative electrode current collector and that is not coated with the negative electrode active material layer protrudes from a portion that is of the negative electrode current collector and that is coated with the negative electrode active material layer, and the portion that is of the negative electrode current collector and that is not coated with the negative electrode active material layer is used as a negative electrode tab. The negative electrode current collector may be made of copper, and the negative electrode active material may be carbon, silicon, or the like. To ensure that a large current passes through without any fusing, a plurality of positive electrode tabs are provided and stacked together, and a plurality of negative electrode tabs are provided and stacked together.

The separator may be made of PP (polypropylene, polypropylene), PE (polyethylene, polyethylene), or the like. In addition, the electrode assembly may be a wound structure or a stacked structure, and the embodiments of the present application are not limited thereto.

In recent years, new energy vehicles have been developed with a great leap. In the field of electric vehicles, power batteries play an irreplaceably important role as a power source of the electric vehicle. The battery is composed of a case, a bottom protective plate, and a plurality of battery cells accommodated in the accommodating cavity defined by the case and the bottom protective plate. As a core component of new energy vehicles, the battery has relatively high requirements in terms of both safety and cycle life.

The inventors have found that the battery is very vulnerable to damage under the bottom scraping condition or the bottom ball condition. When the impact force of the bottom support is too large, the battery may be directly caused to have problems such as abnormal insulation, and more seriously, the battery may self-ignite or even cause safety accidents such as explosion. In the related art, a bottom ball protective structure is added at the bottom of the battery cell, but under this structure, for the battery cell close to the end beam of the case, due to the largest damage to the bottom support, this protective method cannot effectively protect the battery cell at the end.

Based on the above considerations, in order to solve the problem that the battery cell at the end is seriously damaged under the bottom scraping or bottom ball condition, the inventors have designed a battery through in-depth research, including: a case, a bottom protective plate, a protective structure and a plurality of battery cells, where the bottom protective plate and the case define an accommodating cavity; the plurality of battery cells are mounted in the accommodating cavity; the protective structure is mounted on the end beam of the case and located between the end beam and the bottom protective plate, and a minimum distance between the protective structure and the bottom protective plate is not greater than a minimum distance between each of the battery cells and the bottom protective plate.

In the battery with this structure, by disposing the protective structure on the end beam of the case, on the one hand, the protective structure can replace the battery cell at the end to withstand the bottom scraping impact first, thereby reducing the impact energy received by the first battery cell, and then effectively protecting the battery cell at the end, and on the other hand, compared with directly disposing the protective structure at the bottom of the battery cell, the assembly difficulty of the protective structure is reduced, and the connection strength of the protective structure is improved.

An embodiment of the present application provides an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1.

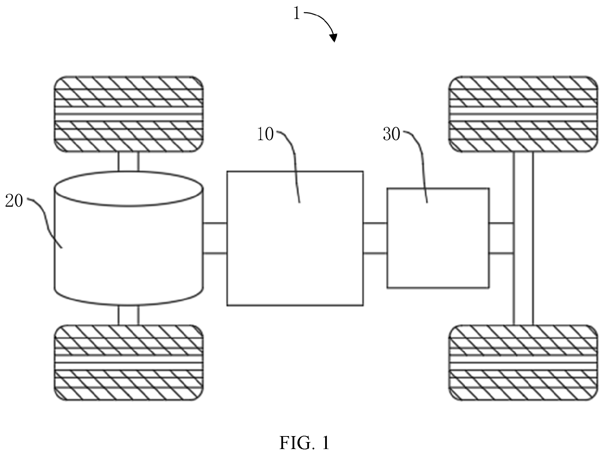

As shown in FIG. 1, FIG. 1 is a schematic structural diagram of a vehicle 1 according to an embodiment of the present application. The vehicle 1 may be a fuel vehicle, a gas vehicle, or a new energy vehicle, and the new energy vehicle may be a battery electric vehicle, a hybrid electric vehicle, or a range-extended electric vehicle, or the like. A motor 20, a controller 30, and a battery 10 may be disposed inside the vehicle 1. The controller 30 is configured to control the battery 10 to supply power to the motor 20. For example, the battery 10 may be disposed at the bottom or at the head or at the tail of the vehicle 1. The battery 10 may be configured to supply power to the vehicle 1, for example, the battery 10 may be used as an operating power source for the vehicle 1, used for a circuit system of the vehicle 1, for example, used for operating power requirements for starting, navigation, and running of the vehicle 1. In another embodiment of the present application, the battery 10 may be used not only as the operating power source of the vehicle 1, but also as a driving power source of the vehicle 1, instead of or partially instead of fuel or natural gas to provide driving power to the vehicle 1.

To meet different power requirements, the battery 10 may include a plurality of battery cells 12, where the plurality of battery cells 12 may be connected through series connection, parallel connection or parallel-series connection, and the parallel-series connection refers to a mixture of series connection and parallel connection.

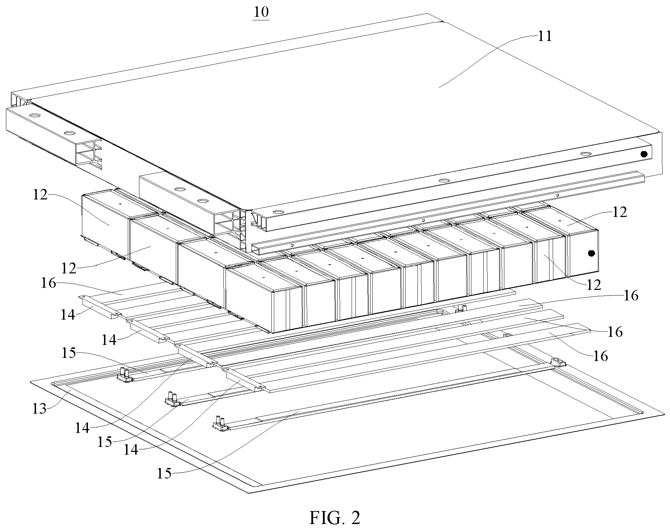

FIG. 2 is an exploded view of a structure of a battery 10 according to an embodiment of the present application. The battery 10 includes a case 11, a bottom protective plate 13 and a plurality of battery cells 12, where the bottom protective plate 13 and the case 11 define an accommodating cavity, and the plurality of battery cells 12 are mounted in the accommodating cavity.

The accommodating cavity defined by the bottom protective plate 13 and the case 11 may be of various shapes, such as a cylinder, a cuboid, and the like.

In the battery 10, a plurality of battery cells 12 may be subjected to series connection, parallel connection, or series-parallel connection. The series-parallel connection means that the plurality of battery cells 12 are subjected to both series connection and parallel connection. The plurality of battery cells 12 may be directly connected in series, in parallel, or in a combination of both, and the whole of the plurality of battery cells 12 is mounted in the accommodating cavity defined by the bottom protective plate 13 and the case 11. Certainly, the battery 10 may also be formed in a manner that a plurality of battery cells 12 are subjected to series connection, parallel connection, or series-parallel connection to form a battery module, and the plurality of battery modules are then subjected to series connection, parallel connection, or series-parallel connection to form an integrated unit, which is mounted in the accommodating cavity defined by the bottom protective plate 13 and the case 11. The battery 10 may further include other structures. For example, the battery 10 may further include a busbar component for implementing an electrical connection between the plurality of battery cells 12.

According to some embodiments of the present application, referring to FIG. 2 to FIG. 4, the present application provides a battery 10, including: a case 11, a bottom protective plate 13, a protective structure 14 and a plurality of battery cells 12. The bottom protective plate 13 and the case 11 define an accommodating cavity; the plurality of battery cells 12 are mounted in the accommodating cavity; and the protective structure 14 is mounted on the end beam 111 of the case 11, the protective structure 14 is located between the end beam 111 and the bottom protective plate 13, and a minimum distance between the protective structure 14 and the bottom protective plate 13 is not greater than a minimum distance between each of the battery cells 12 and the bottom protective plate 13.

In other words, the minimum distance between the protective structure 14 and the bottom protective plate 13 may be equal to the minimum distance between each of the battery cells 12 and the bottom protective plate 13, or the minimum distance between the protective structure 14 and the bottom protective plate 13 may be less than the minimum distance between each of the battery cells 12 and the bottom protective plate 13.

The protective structure 14 may be made of a metal material or a foamed material. Specifically, the metal material may include, but is not limited to, stainless steel, an aluminum alloy, a titanium alloy, or the like, and the foamed material may include, but is not limited to, a microcellular polypropylene foam (MPP)-based foamed material, a polypropylene (PP)-based foamed material, a polyethylene (PE)-based foamed material, or the like, which is not limited herein.

In the case where the protective structure 14 is made of a metal material, the connection manner between the protective structure 14 and the end beam 111 of the case 11 may include, but is not limited to, welding, gluing, bolt connection, flow drill screw (FDS) connection, or rivet connection, which is not limited herein.

In the case where the protective structure 14 is made of a foamed material, the connection manner between the protective structure 14 and the end beam 111 of the case 11 may include, but is not limited to, gluing or bolting, which is not limited herein.

In actual implementation, as shown in FIG. 2 to FIG. 4, after the battery 10 is assembled into the electric device, in a process in which the electric device moves at a high speed, the bottom of the electric device is likely to collide with some bumps in a traveling route, in this bottom scraping condition or bottom ball hitting condition, the bumps first collide with the protective structure 14 located on the end beam 111 of the case 11, the protective structure 14 deforms to some extent to absorb most of impact energy, and then the bumps are in contact with the battery cell 12 close to the end beam 111. Because the protective structure 14 has performed a force relief buffering function on the impact of the bumps, at this time, the impact force of the bumps acting on the battery cell 12 close to the end beam 111 is little, and the threat of bottom support to the battery cell 12 close to the end beam 111 is effectively alleviated.

In the battery 10 provided in this embodiment of the present application, the protective structure 14 is disposed, and a position of the end beam 111 mounted on the case 11 is designed, so that bottom support protection for the plurality of battery cells 12 is implemented, and in a bottom scraping or bottom ball hitting condition, the protective structure 14 may replace the battery cell 12 close to the end beam 111 to first withstand bottom scraping impact, thereby reducing impact energy received by the first battery cell 12, and further effectively protecting the battery cell 12 at the end in a targeted manner, and compared with a case in which the protective structure is directly disposed at the bottom of the battery cell 12, the assembly difficulty of the protective structure 14 is reduced, and the connection strength of the protective structure 14 is improved.

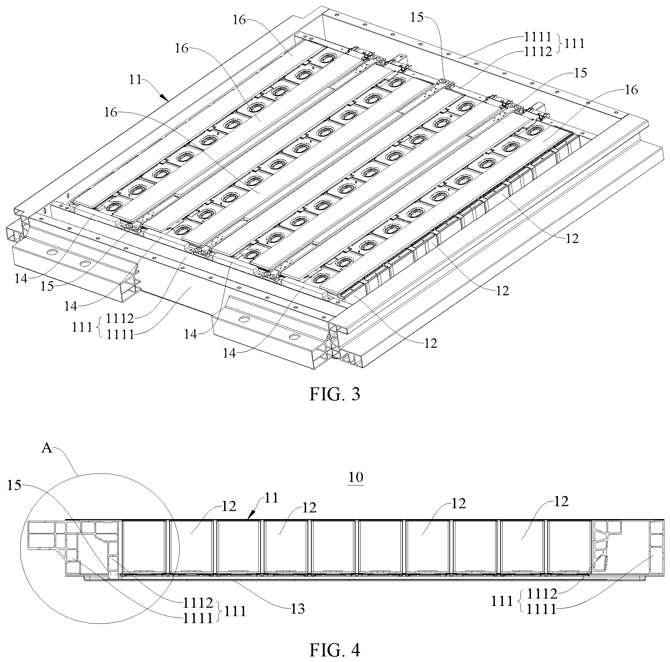

According to some embodiments of the present application, as shown in FIG. 3 to FIG. 5, the end beam 111 may include a first sub-beam 1111 and a second sub-beam 1112 that are connected to each other, the second sub-beam 1112 may be located on a side of the first sub-beam 1111 close to the accommodating cavity, the protective structure 14 may be mounted on the second sub-beam 1112, and a minimum distance between the first sub-beam 1111 and the bottom protective plate 13 may be smaller than a minimum distance between the second sub-beam 1112 and the bottom protective plate 13.

In this implementation, as shown in FIG. 3 to FIG. 5, in the case where the minimum distance between the first sub-beam 1111 and the bottom protective plate 13 is smaller than the minimum distance between the second sub-beam 1112 and the bottom protective plate 13, the space between the second sub-beam 1112 and the bottom protective plate 13 is larger than the space between the first sub-beam 1111 and the bottom protective plate 13, and the space reserved between the second sub-beam 1112 and the bottom protective plate 13 can be sufficient to accommodate the protective structure 14, and under this structure, the bottom protective plate 13 does not need to be specially designed to compensate for the thickness difference of the protective structure 14.

It should be noted that, in the case where the protective structure 14 is made of a metal material, the protective structure 14 is not in contact with the bottom protective plate 13. In the case where the protective structure 14 is made of a foamed material, based on the high elasticity of the foamed material itself, the protective structure 14 is mounted between the end beam 111 and the bottom protective plate 13 in a compressed state.

In the battery 10 provided in this embodiment of the present application, the minimum distances between the first sub-beam 1111 and the second sub-beam 1112 and the bottom protective plate 13 are set in the foregoing relationship, so that the protective structure 14 and the second sub-beam 1112 are assembled, the reserved space between the second sub-beam 1112 and the bottom protective plate 13 is completely sufficient to accommodate the protective structure 14, and the bottom protective plate 13 does not need to be additionally designed to have a special shape to compensate for an assembly tolerance, thereby simplifying processing steps, reducing processing difficulty, and improving production efficiency of the battery 10, which is beneficial to popularization and mass production.

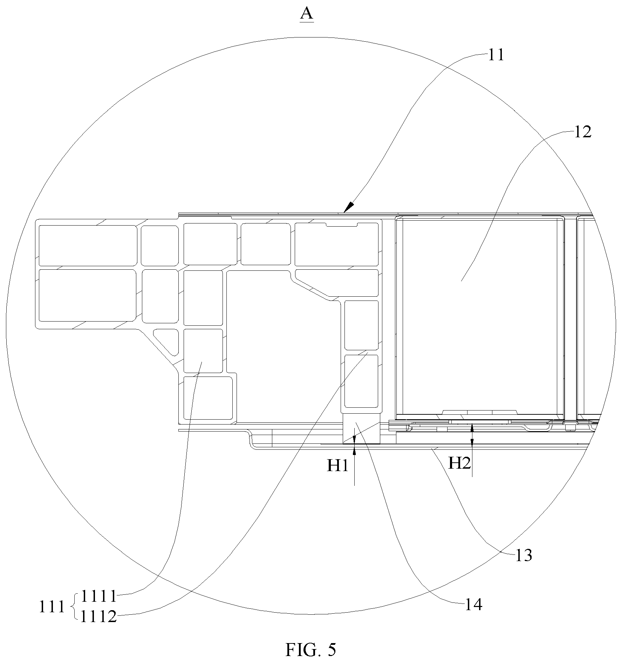

According to some embodiments of the present application, as shown in FIG. 5, a minimum distance H1 between the protective structure 14 and the bottom protective plate 13 and a minimum distance H2 between each of the battery cells 12 and the bottom protective plate 13 may satisfy: 1mm≤H2-H1≤50mm.

Specifically, H2-H1 may be 1 mm, 12.5 mm, 25 mm, 42.55 mm, 50 mm, or other values between 1 mm and 50 mm, which is not limited herein.

According to the battery 10 provided in this embodiment of the present application, the foregoing limitation on the range of H2-H1 prevents the height of the protective structure 14 from being excessively large due to excessively large H2-H1, thereby reducing the volume of the battery 10 as much as possible, and further improving the capacity density of the battery 10. In addition, the excessively small H2-H1 is prevented from causing the sacrificial replacement capability of the protective structure 14 to be excessively weak, thereby optimizing the protective effect of the protective structure 14.

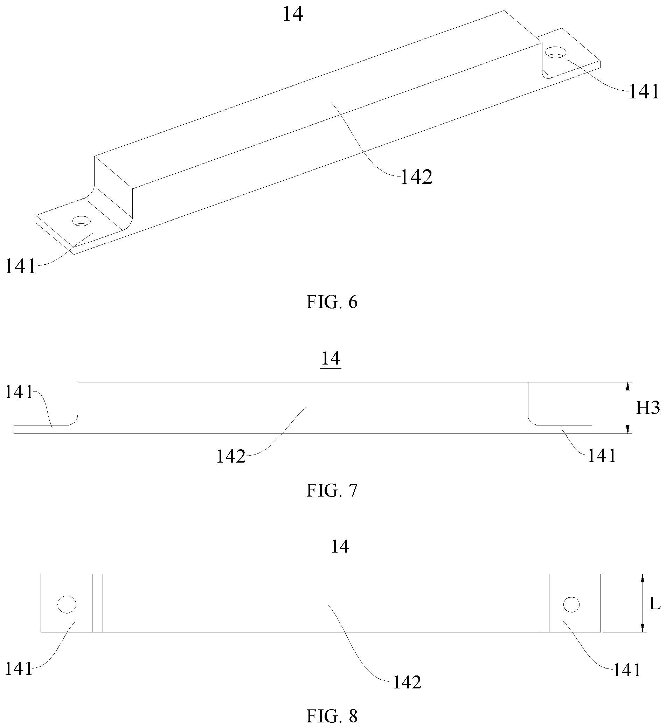

According to some embodiments of the present application, as shown in FIG. 6 to FIG. 8, the protective structure 14 may include an assembly portion 141 and a protrusion portion 142, where the assembly portion 141 may be connected to the end beam 111, the protrusion portion 142 protrudes from the assembly portion 141 toward the bottom protective plate 13, and a minimum distance between the protrusion portion 142 and the bottom protective plate 13 may be not greater than a minimum distance between each of the battery cells 12 and the bottom protective plate 13.

In this implementation, as shown in FIG. 6 to FIG. 8, the connection manner between the assembly portion 141 and the protrusion portion 142 may be integrated molding, the assembly portion 141 may be located at each end of the protrusion portion 142, the thickness of the assembly portion 141 may be much smaller than the thickness of the protrusion portion 142, the protrusion portion 142 may protect the battery cell 12 close to the end beam 111 under the bottom support condition, and the assembly portion 141 may be connected to the end beam 111 of the case 11. Specifically, in a case that the assembly portion 141 is connected to the end beam 111 of the case 11 by a connecting member such as a bolt, a flow drill screw (FDS), or a rivet, the assembly portion 141 may be provided with a connecting hole that cooperates with the connecting member, and the end beam 111 of the case 11 may also be provided with a corresponding connecting hole. In the case where the assembly portion 141 is connected to the end beam 111 of the case 11 by welding, a plurality of welding spots may be disposed between the assembly portion 141 and the end beam 111 of the case 11, and the welding manner may be plug welding, spot welding, projection welding, or the like. In the case where the assembly portion 141 is connected to the end beam 111 of the case 11 by gluing, the assembly portion 141 and the end beam 111 of the case 11 may be bonded by using a structural adhesive with high strength, wherein the structural adhesive may include, but is not limited to, a high-performance silicone structural adhesive or a neutral transparent silicone structural adhesive.

In the battery 10 provided in this embodiment of the present application, by disposing the assembly portion 141 and the protrusion portion 142, the protrusion portion 142 can effectively protect the battery cell 12 from being supported by the bottom, and the assembly portion 141 is connected to the end beam 111 of the case 11 to implement fixed assembly of the protective structure 14, so that an overall structure is simple, a function partition is clear, and a miniaturized and lightweight design is implemented.

According to some embodiments of the present application, as shown in FIG. 2 to FIG. 3, in a case that the explosion-proof valve of the battery cell 12 faces the bottom protective plate 13, the protrusion portion 142 and the explosion-proof valve may be disposed opposite to each other, and a length of the protrusion portion 142 may be greater than a length of the explosion-proof valve.

In this implementation, as shown in FIG. 2 to FIG. 3, the opening of the case 11 may face downward, the explosion-proof valve and the electrode terminal of the battery cell 12 may face the bottom protective plate 13, the center of the protrusion portion 142 and the center of the explosion-proof valve may be arranged to face each other in the front-rear direction, and the length of the protrusion portion 142 may be greater than the length of the explosion-proof valve. When the battery 10 is in a scraping bottom or bottom ball condition, the bump in the traveling route may impact the battery cell 12 in the front-rear direction, and in the case that the shielding length of the protrusion portion 142 is sufficient, the bump is difficult to bypass the protrusion portion 142 to directly impact the explosion-proof valve of the battery cell 12.

According to the battery 10 provided in this embodiment of the present application, by designing the length of the protrusion portion 142 of the protective structure 14 when the explosion-proof valve of the battery cell 12 faces the bottom protective plate 13, the protrusion portion 142 of the protective structure 14 mainly protects the explosion-proof valve of the battery cell 12 of the bottom spray structure from bottom support in a bottom scraping or bottom ball condition, to prevent the explosion-proof valve from bottom scraping impact because the protrusion portion 142 has an insufficient length to shield the explosion-proof valve of the bottom spray, thereby optimizing safety protection performance of the entire battery 10.

According to some embodiments of the present application, as shown in FIG. 2 to FIG. 3, the battery 10 may further include: a pressing bar 15.

The pressing bar 15 may be connected to the case 11, the pressing bar 15 may be located between the plurality of battery cells 12 and the bottom protective plate 13, the pressing bar 15 may be configured to cooperate with the protective structure 14 to protect the electrode terminals of the battery cells 12, and the length of the protrusion portion 142 may be less than the minimum distance between the farthest ends of the two electrode terminals of the battery cells 12.

The pressing bar 15 may include a pressing bar body and a joint. The pressing bar body may form a mounting groove. Both ends of the pressing bar body may be connected with joints. Each of the joints may include a main body section connected with the pressing bar body and an assembly section connected with the case 11, and at least part of the main body section may be mounted in the mounting groove.

In actual implementation, as shown in FIG. 2 to FIG. 3, the width of the main body section may be less than the width of the assembly section. The entire joint may be approximately T-shaped, the thickness of the main body section may be less than the thickness of the assembly section, the assembly section may be disposed separately from the protective structure 14, and when the battery 10 is in a bottom scraping or bottom ball condition, because the length of the protrusion portion 142 may be greater than the length of the explosion-proof valve, the length of the protrusion portion 142 may be less than the minimum distance between the farthest ends of the two electrode terminals of the battery cell 12, the protrusion portion 142 may jointly shield the two electrode terminals in the front-rear direction in combination with the assembly section of the pressing bar 15, and the protrusion portion is difficult to directly impact the two electrode terminals of the battery cell 12 by bypassing the protrusion portion 142 and the assembly section of the pressing bar 15.

In the battery 10 provided in this embodiment of the present application, by means of the design of the pressing bar 15 combined with the length design of the protrusion portion 142 of the protective structure 14, a problem that the protective structure 14 alone is insufficient to protect the two electrode terminals is solved, so that the protrusion portion 142 in combination with the pressing bar 15 protects the electrode terminals of the battery cell 12 of the bottom spray structure from being held by the bottom when the battery cell is scraped off or is in a bottom ball state, thereby further optimizing safety protection performance of the entire battery 10.

According to some embodiments of the present application, when the explosion-proof valve of the battery cell 12 does not face the bottom protective plate 13 and the electrode terminals of the battery cell 12 face the bottom protective plate 13, the length of the protrusion portion 142 may be not less than the minimum distance between the farthest ends of the two electrode terminals of the battery cell 12.

In this implementation, the explosion-proof valve does not face the bottom, the electrode terminals face the bottom, the length of the protrusion portion 142 may be equal to the minimum distance between the farthest ends of the two electrode terminals of the battery cell 12, or the length of the protrusion portion 142 may be greater than the minimum distance between the farthest ends of the two electrode terminals of the battery cell 12. When the battery 10 is in a bottom scraping or bottom ball condition, a bump in the traveling route may impact the battery cell 12 in the front-rear direction, and in the case that the shielding length of the protrusion portion 142 is sufficient, it is difficult for the bump to directly impact the two electrode terminals of the battery cell 12 by bypassing the protrusion portion 142.

In the battery 10 provided in this embodiment of the present application, by designing the length of the protrusion portion 142 of the protective structure 14 in the case that the explosion-proof valve does not face the bottom protective plate 13 and the electrode terminals face the bottom protective plate 13, the protrusion portion 142 of the protective structure 14 mainly protects the two electrode terminals of the battery cell 12 from being lifted in the bottom scraping or bottom ball condition, to prevent the electrode terminals from being subjected to a scraping impact caused by the protrusion portion 142 having an insufficient length to shield the two electrode terminals at the bottom, thereby optimizing the safety protection performance of the entire battery 10.

According to some embodiments of the present application, as shown in FIG. 2 to FIG. 3, the protective structure 14 may include a plurality of protective structures spaced apart along the length direction of the end beam 111, the plurality of battery cells 12 are arranged in an array stack in the accommodating cavity, and the plurality of protective structures 14 may be in a one to-one correspondence with the plurality of columns of battery cells 12.

The "plurality of" means two or more than two, for example, in some embodiments, as shown in FIG. 2 to FIG. 3, the protective structure 14 may include four protective structures spaced apart along the length direction of the end beam 111, and the four protective structures 14 may correspond to the four columns of battery cells 12 in a one to-one manner.

In this embodiment, as shown in FIG. 2 to FIG. 3, the arrangement direction of the two end beams 111 is the front-rear direction, the length direction of the end beam 111 is the left-right direction, the plurality of battery cells 12 may be divided into a plurality of columns along the left-right direction, the plurality of battery cells 12 may be divided into a plurality of rows along the front-rear direction, and when the battery 10 is in a bottom scraping or bottom ball condition, the bottom scraping structure protective can protect the corresponding column of battery cells 12 in a targeted manner.

According to the battery 10 provided in this embodiment of the present application, by disposing the plurality of protective structures 14, in combination with the structural design in which the plurality of protective structures 14 and the plurality of columns of battery cells 12 are disposed opposite to each other, each column of battery cells 12 is specifically protected in a bottom scraping or bottom ball condition, and impact energy received by the first battery cell 12 in each column is comprehensively reduced, thereby comprehensively optimizing a bottom scraping and bottom protection effect of the battery 10, and further improving consistency of the entire battery 10.

According to some embodiments of the present application, as shown in FIG. 7, a maximum height H3 of the protective structure 14 may satisfy: 1mm≤H3≤50mm.

Specifically, the maximum height H3 of the protective structure 14 may be 1 mm, 5.25 mm, 10 mm, 25 mm, 45.5 mm, 50 mm, or other values between 1 mm and 50 mm, which is not limited herein.

Preferably, the maximum height H3 of the protective structure 14 may satisfy: 5mm≤H3≤30mm.

According to the battery 10 provided in this embodiment of the present application, the foregoing range limitation on the maximum height H3 of the protective structure 14 prevents the volume of the protective structure 14 from being excessively large due to the excessively large maximum height H3 of the protective structure 14, thereby reducing the volume of the battery 10 as much as possible, and further improving the energy density of the battery 10. In addition, the maximum height H3 of the protective structure 14 is prevented from being excessively small, so that a buffering effect provided by the protective structure 14 is insufficient, thereby enhancing a sacrificial protection capability of the protective structure 14 as much as possible, and further reducing impact energy received by the first battery cell 12.

According to some embodiments of the present application, as shown in FIG. 8, a minimum width L of the protective structure 14 may satisfy: 10mm≤L≤50mm.

Specifically, the minimum width L of the protective structure 14 may be 10 mm, 15.5 mm, 22.225 mm, 25 mm, 37.5 mm, 50 mm, or other values between 10 mm and 50 mm, which is not limited herein.

Preferably, the minimum width L of the protective structure 14 may satisfy: 10mm≤L≤30mm.

It should be noted that, in an actual design, the width of the protective structure 14 may be uniform along the length direction.

According to the battery 10 provided in this embodiment of the present application, the foregoing range limitation on the minimum width L of the protective structure 14 prevents the volume of the protective structure 14 from being excessively large due to the excessively large minimum width L of the protective structure 14, thereby reducing the volume of the battery 10 as much as possible, and further improving the energy density of the battery 10. In addition, the minimum width L of the protective structure 14 is prevented from being excessively small, so that a buffering effect provided by the protective structure 14 is insufficient, thereby enhancing a sacrificial protection capability of the protective structure 14 as much as possible, and further reducing impact energy received by the first battery cell 12.

According to some embodiments of the present application, as shown in FIG. 1 to FIG. 5, the case 11 may include a front end beam and a rear end beam, and in the case where the battery 10 is mounted to the vehicle, the front end beam and the rear end beam are spaced apart in the front-rear direction along the traveling direction of the vehicle, where the front end beam may be provided with the protective structure 14.

In this implementation, as shown in FIG. 1 to FIG. 5, taking the electric device being a vehicle 1 as an example, during the driving of the vehicle 1, the chassis of the vehicle 1 is likely to scratch the bump in the driving route when the road condition is poor. Based on the driving direction of the vehicle 1 being forward, when the vehicle 1 has a scratch or bottom ball accident, the bump usually impacts the battery 10 in the front-to-rear direction. In the case that the front end beam may be provided with the protective structure 14, the bump first collides with the protective structure 14 located at the front end beam, the protective structure 14 deforms to a certain extent to absorb most of the impact energy, and then the bump is in contact with the battery cell 12 close to the end beam 111. Since the protective structure 14 has already played a role of unloading and buffering the impact on the bump, the impact force of the bump acting on the battery cell 12 close to the front end beam is very little at this time, and the threat of bottom support to the battery cell 12 close to the front end beam is effectively alleviated.

According to the battery 10 provided in this embodiment of the present application, by means of the structural design in which the front end beam is provided with the protective structure 14, in a bottom scraping or bottom ball hitting condition, the protective structure 14 may replace the battery cell 12 close to the front end beam to first bear an impact of bottom scraping, thereby reducing impact energy received by the first battery cell 12 close to the front end beam when a bottom support accident occurs in a process in which the electric device moves forward.

According to some embodiments of the present application, the case 11 may include a front end beam and a rear end beam, where both the front end beam and the rear end beam may be provided with the protective structure 14.

In this embodiment, as shown in FIG. 1 to FIG. 5, taking the electric device being the vehicle 1 as an example, the normal service direction of the vehicle 1 is forward. However, the vehicle 1 needs to retreat in some special cases. In the case that the vehicle 1 retreats, since the driver's sight is partially blocked, the undercarriage of the vehicle 1 is easy to rub against the bump in the backing route. Based on the speed of the vehicle 1 under the backing condition is much lower than the speed of the vehicle 1 under the normal service condition, the impact force of the bump when the vehicle 1 is backed up is much smaller, but it still poses a certain threat to the first battery cell close to the rear end beam. In the case that both the front end beam and the rear end beam may be provided with the protective structure 14, when the vehicle 1 is scraped or hit during the forward process, the protective structure 14 located on the front end beam may first collide with the bump to protect the first battery cell 12 close to the front end beam. When a bottom scraping or bottom ball accident occurs during the retreating movement of the vehicle 1, the protective structure 14 located on the rear end beam may first collide with the bump to protect the first battery cell 12 close to the rear end beam.

According to the battery 10 provided in this embodiment of the present application, by means of the structural design in which both the front end beam and the rear end beam are provided with the protective structure 14, the protective structure 14 may replace the battery cell 12 close to the front end beam and the rear end beam to first bear a bottom scraping impact, thereby reducing impact energy received by the first battery cell 12 close to the front end beam when a bottom support accident occurs in a forward traveling process of the electric device, and reducing impact energy received by the first battery cell 12 close to the rear end beam when a bottom support accident occurs in a backward traveling process of the electric device, thereby greatly increasing a use width of the battery 10.

According to some embodiments of the present application, as shown in FIG. 2 to FIG. 3, the battery 10 may further include buffer members 16, where the buffer members 16 may be disposed on bottom surfaces of the plurality of battery cells 12, the buffer members 16 may be spaced apart from the pressing bar 15, and both the buffer members 16 and the pressing bar 15 may be located between the plurality of battery cells 12 and the bottom protective plate 13.

In the case that the electrode terminals face the bottom protective plate 13, the buffer members 16 may serve to protect the electrode terminals of the plurality of battery cells 12.

Each of the buffer members 16 may include, but is not limited to, a foamed plate, pearl cotton, polyurethane foam, or the like, which is not limited herein.

By disposing the buffer members 16 on the bottom surfaces of the plurality of battery cells 12 and cooperating with the arrangement of the protective structure 14, double protection of the plurality of battery cells 12 under the bottom scraping or bottom ball condition is realized, and the impact energy received by the first battery cell 12 is further reduced.

According to some embodiments of the present application, the present application further provides an electric device, including the battery 10 in any one of the above solutions, and the battery 10 is configured to provide electric energy for the electric device.

The electric device may be any one of the above devices or systems using the battery 10.

According to some embodiments of the present application, referring to FIG. 2 to FIG. 8, the present application provides a battery 10, including: a case 11, a bottom protective plate 13, a protective structure 14 and a plurality of battery cells 12, where the bottom protective plate 13 and the case 11 define an accommodating cavity; the plurality of battery cells 12 are mounted in the accommodating cavity; and the protective structure 14 is mounted on the end beam 111 of the case 11, the protective structure 14 is located between the end beam 111 and the bottom protective plate 13, and a minimum distance between the protective structure 14 and the bottom protective plate 13 is not greater than a minimum distance between each of the battery cells 12 and the bottom protective plate 13. The end beam 111 includes a first sub-beam 1111 and a second sub-beam 1112 that are connected to each other, the second sub-beam 1112 is located on a side of the first sub-beam 1111 close to the accommodating cavity, the protective structure 14 is mounted on the second sub-beam 1112, and a minimum distance between the first sub-beam 1111 and the bottom protective plate 13 is less than a minimum distance between the second sub-beam 1112 and the bottom protective plate 13. The protective structure 14 includes an assembly portion 141 and a protrusion portion 142, the assembly portion 141 is connected to the end beam 111, and a minimum distance between the protrusion portion 142 and the bottom protective plate 13 is not greater than a minimum distance between the battery cell 12 and the bottom protective plate 13. The protective structure 14 includes a plurality of protective structures spaced apart along the length direction of the end beam 111, the plurality of battery cells 12 are arranged in an array stack in the accommodating cavity, and the plurality of protective structures 14 are in one to-one correspondence with the plurality of columns of battery cells 12. The case 11 includes a front end beam and a rear end beam, where the front end beam is provided with the protective structure 14.

The explosion-proof valve of the battery cell 12 faces the bottom protective plate 13, the protrusion portion 142 is disposed opposite to the explosion-proof valve, a length of the protrusion portion 142 is greater than a length of the explosion-proof valve, and the battery 10 further includes: a pressing bar 15, where the pressing bar 15 is connected to the case 11, the pressing bar 15 is located between the plurality of battery cells 12 and the bottom protective plate 13, the pressing bar 15 is configured to cooperate with the protective structure 14 to protect the electrode terminals of the battery cells 12, and the length of the protrusion portion 142 is less than the minimum distance between the farthest ends of the two electrode terminals of the battery cells 12.

The minimum distance H1 between the protective structure 14 and the bottom protective plate 13 and the minimum distance H2 between the battery cell 12 and the bottom protective plate 13 satisfy: 0mm≤H2-H1≤50mm; the maximum height H3 of the protective structure 14 satisfies: 1mm≤H3≤50mm; and the minimum width L of the protective structure 14 satisfies: 10mm≤L≤50mm.

It should be noted that, without contradictory, the embodiments in the present application may be combined with the features in the embodiments.

The above descriptions are merely preferred embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

## Claims

1. A battery, comprising:
a case;
a bottom protective plate, wherein the bottom protective plate and the case define an accommodating cavity;
a plurality of battery cells, wherein the plurality of battery cells are mounted in the accommodating cavity; and
protective structures, wherein the protective structures are mounted on an end beam of the case and located between the end beam and the bottom protective plate, and a minimum distance between each of the protective structures and the bottom protective plate is not greater than a minimum distance between each of the battery cells and the bottom protective plate.

2. The battery according to claim 1, wherein the end beam comprises a first sub-beam and a second sub-beam that are connected, the second sub-beam is located on a side of the first sub-beam close to the accommodating cavity, each of the protective structures is mounted on the second sub-beam, and a minimum distance between the first sub-beam and the bottom protective plate is less than a minimum distance between the second sub-beam and the bottom protective plate.

3. The battery according to claim 1 or 2, wherein the minimum distance H1 between each of the protective structures and the bottom protective plate and the minimum distance H2 between each of the battery cells and the bottom protective plate satisfy: 1mm≤H2-H1≤50mm.

4. The battery according to any one of claims 1 to 3, wherein each of the protective structures comprises an assembly portion and a protrusion portion, the assembly portion is connected to the end beam, the protrusion portion protrudes from the assembly portion toward the bottom protective plate, and a minimum distance between the protrusion portion and the bottom protective plate is not greater than the minimum distance between each of the battery cells and the bottom protective plate.

5. The battery according to claim 4, wherein in a case that an explosion-proof valve of each of the battery cells faces the bottom protective plate, the protrusion portion and the explosion-proof valve are disposed opposite to each other, and a length of the protrusion portion is greater than a length of the explosion-proof valve.

6. The battery according to claim 5, further comprising:
a pressing bar, wherein the pressing bar is connected to the case, is located between the plurality of battery cells and the bottom protective plate, and is configured to cooperate with each of the protective structures to protect electrode terminals of each of the battery cells, and a length of the protrusion portion is less than a distance between the farthest ends of two electrode terminals of each of the battery cells.

7. The battery according to claim 4, wherein in a case that an explosion-proof valve of each of the battery cells does not face the bottom protective plate and the electrode terminals of each of the battery cells face the bottom protective plate, a length of the protrusion portion is not less than a distance between the farthest ends of two electrode terminals of each of the battery cells.

8. The battery according to any one of claims 1 to 7, wherein there are a plurality of protective structures spaced apart in a length direction of the end beam, the plurality of battery cells are arranged in an array stack in the accommodating cavity, and the plurality of protective structures are in one to-one correspondence with the plurality of columns of battery cells.

9. The battery according to any one of claims 1 to 8, wherein a maximum height H3 of each of the protective structures satisfies: 1mm≤H3≤50mm.

10. The battery according to any one of claims 1 to 9, wherein a minimum width L of each of the protective structures satisfies: 10mm≤L≤50mm.

11. The battery according to any one of claims 1 to 10, wherein the case comprises a front end beam and a rear end beam, and in a case that the battery is mounted to a vehicle, the front end beam and the rear end beam are spaced apart in a front-rear direction along a traveling direction of the vehicle, wherein
the front end beam is provided with the protective structure;
or
the front end beam and the rear end beam are both provided with the protective structures.

12. An electric device, comprising:
the battery according to any one of claims 1 to 11.
